# FASCICULE DE BREVET EUROPEEN

(11) **EP 0 677 729 B1**
(45) Date de publication et mention de la délivrance du brevet: **02.06.1999**
(21) Numéro de dépôt: 95104544.2
(22) Date de dépôt: 28.03.1995
(51) Int. Cl.: G01M 17/02

(54) **Roue de mesure de pneumatiques**
Messrad für Reifen
Measuring wheel for tyres

(30) Priorité: 12.04.1994 FR 9404422
(43) Date de publication de la demande: 18.10.1995
(73) Titulaire: COMPAGNIE GENERALE DES ETABLISSEMENTS MICHELIN - MICHELIN & CIE, 63040 Clermont-Ferrand Cédex (FR)
(72) Inventeur: Leclair, Serge, F-63118 Cebazat (FR)
(74) Mandataire: Devaux, Edmond-Yves

(56) Documents cités:
- DE-A- 3 934 626
- FR-A- 1 528 419

## Description

La présente invention concerne les roues de mesure de pneumatiques. Elle concerne plus particulièrement les roues comportant des sièges et permettant de mesurer l'effort de serrage qu'un pneumatique, monté et gonflé sur ladite roue, exerce par ses bourrelets sur les sièges de ladite roue.

Le gonflage d'un pneumatique, monté sur une roue possédant des sièges dont les génératrices font un angle maximum de 30° par rapport à l'axe de rotation de ladite roue et disposant de rebords, permet la mise en place progressive des bourrelets dudit pneumatique sur les sièges de roue. Le rôle des rebords est de limiter l'écartement axial des bourrelets à la position finale souhaitée. Au cours de cette mise en place, il apparaît un serrage entre chaque bourrelet et le siège correspondant de ladite roue, c'est-à-dire qu'il s'établit un effort de serrage sous la forme d'une répartition de pressions de contact agissant perpendiculairement à la surface dudit siège.

Dans le cas d'un pneumatique monté sur une roue et gonflé, on considère que ladite répartition de pressions de contact est sensiblement axisymétrique autour de l'axe de rotation de ladite roue, c'est-à-dire que lesdites pressions de contact ne varient en grandeur que dans la direction axiale et pas dans la direction circonférentielle. On définit alors un effort de serrage d'un bourrelet, appelé aussi résultante des pressions de contact qu'exerce ledit bourrelet sur son siège, comme étant la force par unité de longueur circonférentielle qu'il faudrait appliquer sur la surface radialement à l'extérieur dudit siège pour obtenir des déformations dudit siège identiques à celles résultant des pressions de contact.

Si l'on veut satisfaire à la fois à des exigences d'étanchéité du pneumatique monté sur sa roue et à des exigences de transmission efficace des efforts moteur ou freineur entre un pneumatique et sa roue de montage tout en conservant une bonne facilité de mise en place dudit pneumatique sur sa roue, il est nécessaire de contrôler le serrage de chacun des bourrelets dudit pneumatique sur les sièges de sa roue de montage. Pour cela, il est souhaitable de pouvoir mesurer la résultante des pressions de contact de chacun des bourrelets d'un pneumatique sur les sièges de sa roue de montage et de pouvoir déterminer la position axiale d'application de ladite résultante, et cela dans des conditions identiques à celles de l'utilisation ultérieure du pneumatique en clientèle.

Pour réaliser une mesure de l'effort de serrage, il existe dans le commerce un dispositif décrit en particulier dans le brevet français 2 630 824. Ledit dispositif comporte des moyens d'extension susceptibles d'être déplacés radialement vers l'extérieur afin d'allonger circonférentiellement le bourrelet d'un pneumatique et dans lequel, à l'aide de moyens dynamométriques, on mesure les forces de contact dudit bourrelet sur les moyens d'extension. Ce dispositif présente cependant des inconvénients majeurs qui ne permettent pas un contrôle satisfaisant du serrage d'un pneumatique sur sa roue de montage. En premier lieu, un tel dispositif ne permet pas de réaliser la mesure avec un pneumatique gonflé compte tenu de la perte d'étanchéité due aux discontinuités circonférentielles entre les différents éléments constituant les moyens de serrage. Il est donc très difficile, voire impossible, de réaliser des mesures d'effort de serrage dans le cas d'un siège de mesure faisant un angle supérieur ou égal à 5° par rapport à l'axe de rotation pour la simple raison que le bourrelet ne peut être maintenu en place sur ledit siège et va pouvoir glisser par rapport audit siège pendant la mesure. On est donc conduit à employer des sièges à profil cylindrique pour éviter un glissement relatif entre moyens d'extension et le bourrelet. Ce montage n'est donc pas du tout représentatif du pneumatique sur sa roue de montage comportant des sièges inclinés.

Un autre inconvénient de ladite méthode réside dans le fait que ce n'est pas le bourrelet du pneumatique qui se met en place sur le siège de la roue - comme dans le cas du montage réel sur une roue classique - mais les éléments d'extension censés représenter ledit siège qui viennent s'appliquer sur ledit bourrelet.

On comprend que, non seulement l'allure du dispositif de mesure est fort éloigné des roues classiques de pneumatiques, mais en plus la méthode de mise en contact du bourrelet et du dispositif n'a rien de similaire avec le montage d'un bourrelet sur une roue.

Un objectif de la présente invention est de proposer un moyen de mesure réaliste de l'effort de serrage d'un bourrelet de pneumatique monté sur une roue comportant des sièges faisant un angle maximum de 30° par rapport à l'axe de rotation. Un autre objectif est de fournir un moyen permettant d'évaluer la position axiale de la résultante des pressions de contact sur le siège de roue.

L'invention concerne une roue de mesure de l'effort de serrage des bourrelets d'un pneumatique, ladite roue ayant des sièges destinés à supporter l'effort de serrage des bourrelets dudit pneumatique, caractérisée en ce que au moins l'un des sièges comporte un anneau de mesure ayant une surface de contact formant une partie dudit siège, ladite face étant de révolution autour de l'axe rotation, ledit anneau comportant des moyens de mesure de la résultante des pressions de contact sur la surface de contact de l'anneau de mesure et ladite roue comportant des moyens pour permettre le positionnement axial précis du bourrelet par rapport audit anneau.

En pratique, des moyens de maintien de l'anneau de mesure par rapport à la roue de mesure sont employés pendant la phase de montage du bourrelet d'un pneumatique sur le siège de mesure, lesdits moyens pouvant être ensuite escamotés pendant la phase de mesure proprement dite. D'autre part, il est nécessaire de dimensionner, à l'aide d'une méthode de calcul de structure par exemple, l'anneau de mesure de façon à avoir une rigidité de rétreint dudit anneau qui soit suffisamment proche de celle de la roue d'utilisation si l'on désire obtenir l'effort global de serrage qui existe avec le même pneumatique sur ladite roue d'utilisation. Par rigidité de rétreint de l'anneau de mesure, il faut comprendre le rapport entre la résultante des efforts de pression exercés sur la face de contact et la valeur maximale des déformations circonférentielles sur ladite face.

Les moyens de mesure de la résultante des pressions de contact comprennent, par exemple, des jauges d'extensométrie collées à des emplacements appropriés sur l'anneau de mesure de façon à mesurer le rétreint dudit anneau de mesure, des moyens de traitement de ladite valeur du rétreint afin d'obtenir la valeur de ladite résultante, et des moyens d'affichage de ladite résultante.

Ce même anneau de mesure peut aussi comporter des moyens de mesure de la position axiale de la résultante des pressions de contact sur la surface de contact de l'anneau de mesure. Lesdits moyens peuvent comprendre des jauges d'extensométrie, permettant d'obtenir la rotation de la section transversale dudit anneau de mesure sous l'action des pressions de contact, et des moyens de traitement de ladite valeur de la rotation afin d'obtenir tout d'abord le moment de flexion équivalent au moment de la résultante desdites pressions de contact et enfin la valeur du bras de levier de ladite résultante, c'est-à-dire la valeur de la position axiale de ladite résultante sur la surface de contact de l'anneau de mesure.

D'autre part, il est prévu des moyens pour assurer l'étanchéité de la roue de mesure afin de réaliser la mesure de l'effort de serrage qu'un pneumatique, monté et gonflé, exerce par ses bourrelets sur les sièges de ladite roue.

La description qui suit en regard du dessin annexé illustrant un mode de réalisation préféré, et donné à titre d'exemple, permettra une meilleure compréhension de la mise en oeuvre de l'invention. Sur ce dessin :
- La figure 1 est une vue en coupe radiale méridienne d'une roue de mesure selon l'invention;
- La figure 2 représente les différentes répartitions de pression de contact employées pour la détermination de la section transversale de l'anneau de mesure;
- La figure 3 est une vue en coupe radiale méridienne du siège de mesure correspondant à la roue de mesure de la figure 1;
- La figure 4 est une vue en coupe radiale méridienne d'un siège de mesure comportant une dépression dans laquelle est placé un film assurant l'étanchéité dudit siège.
- La figure 5 est une vue en coupe radiale méridienne d'un siège de mesure avec une étanchéité réalisée avec un joint.

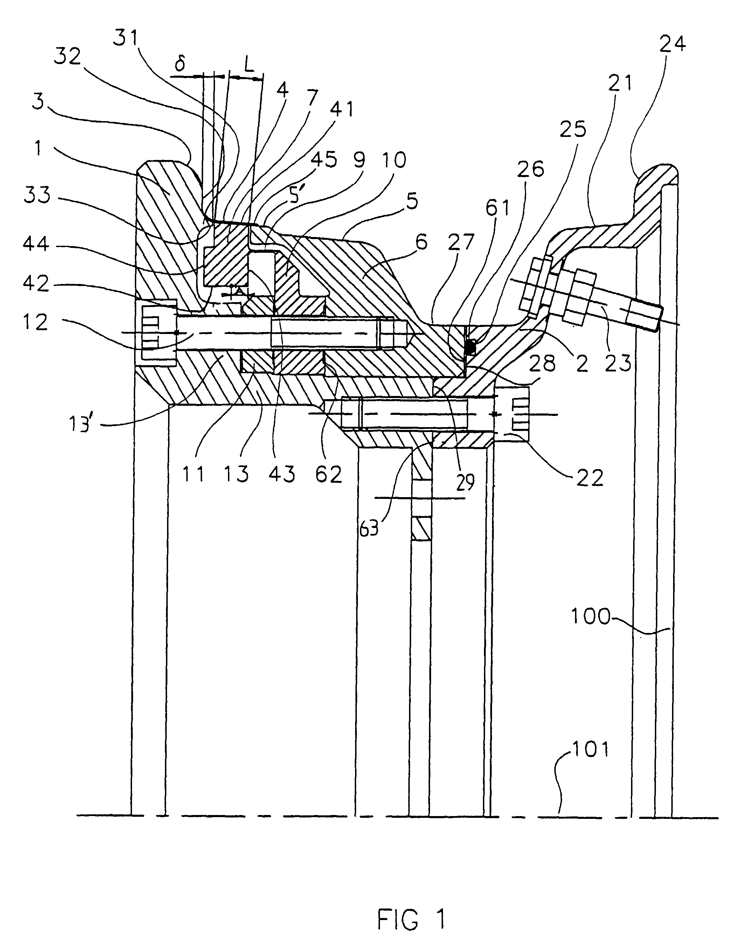

La roue de mesure 100 représentée en coupe méridienne à la figure 1 comporte une jante démontable, ayant une gorge classique, destinée au montage d'un pneumatique tourisme de diamètre au siège 14'' et dont les sièges de roue 4 et 21 sont inclinés d'un angle de 5° ± 1° par rapport à l'axe de rotation 101 de ladite roue, les points des sièges axialement les plus à l'extérieur étant aussi les points les plus à l'extérieur radialement. La roue est constituée par l'assemblage mécanique de plusieurs anneaux métalliques 1, 11, 10, 6 et 2 montés coaxialement. Ladite roue de mesure 100 permet la mesure du serrage d'un bourrelet de pneumatique sur le siège 4.

L'anneau 1 comporte une partie 13 dont la surface radialement à l'extérieur est composée, dans le sens axial, de trois surfaces cylindriques dont les rayons extérieurs diffèrent d'environ 0,5 mm, le plus grand rayon se trouvant le plus à l'extérieur axialement et le plus petit rayon se trouvant le plus à l'intérieur axialement, dans le but de faciliter la mise en place des divers éléments composant la roue de mesure. D'autre part, l'anneau 1 comporte un renflement 13' positionné axialement et radialement à l'extérieur de la partie 13, ladite partie 13' étant prolongée axialement et radialement vers l'extérieur par un rebord 3 dont la fonction est de positionner axialement le bourrelet du pneumatique en contact avec ledit rebord. Ce rebord 3, reproduisant la géométrie du rebord de la roue d'utilisation telle que définie par les normes actuellement en vigueur (ETRTO, TRA), comporte une face plane 32 perpendiculaire à l'axe 101, prolongée axialement vers l'intérieur par la surface radialement à l'extérieur d'un bec 31 et dont la trace sur un plan radial méridien est un arc de cercle de rayon 4 mm. L'extrémité 33 de ce bec 31 axialement à l'intérieur est située, par rapport à la face 32, à une distance δ de l'ordre de 3,7 mm.

Un anneau de mesure 7 comporte, radialement à l'extérieur, une face 41 de révolution autour de 101 et faisant un angle de 5° ± 1° par rapport à l'axe 101 et de largeur L mesurée parallèlement à ladite face dans le plan de la figure. Il comporte une face 42 de révolution autour de 101 et radialement opposée à la face 41, une face 43 axialement à l'intérieur et perpendiculaire à l'axe de rotation 101 et enfin une face 44 axialement à l'extérieur formée de deux faces perpendiculaires à l'axe de rotation 101 reliées entre elles par une face cylindrique.

Suivant un autre aspect de l'invention, on réalise une roue de mesure dans laquelle l'anneau de mesure 7 est lié à la roue d'une façon qui, quant à l'effet de serrage, le découple du reste de celle-ci; dans ce cas, les moyens prévus pour maintenir en place ledit anneau de mesure 7, pendant la phase de montage du bourrelet sur le siège de mesure, ne sont pas escamotables pendant les mesures mais restent solidaires dudit anneau et ont malgré cela une incidence faible sur la rigidité de rétreint dudit anneau. Pour cela, un tube mince 9, dont l'axe est confondu avec l'axe de rotation 101, assure la liaison mécanique entre l'anneau de mesure 7 et l'anneau de liaison 10. Le tube 9 a une épaisseur de 0,5 mm, ce qui lui confère ainsi une rigidité suffisamment faible pour ne pas modifier sensiblement la rigidité de rétreint de l'anneau 7 mais suffisante pour équilibrer la composante axiale de la résultante des pressions de contact.

Le montage des différents éléments composant la roue s'effectue en emboitant la partie 13 de l'anneau 1 dans l'anneau 11 jusqu'à ce que la face axialement à l'intérieur du renflement 13' dudit anneau 1 soit en contact avec une saillie circonférentielle de section transversale rectangulaire de 3x0,5 mm réalisée sur la face axialement à l'extérieur de l'anneau 11. Ensuite, l'anneau de liaison 10, supportant l'anneau de mesure 7 par l'intermédiaire du tube 9, est mis en place, par emboitage de la partie 13 de l'anneau 1 dans ledit anneau 10, jusqu'à ce que la face axialement à l'extérieur dudit anneau 10 soit en contact avec la face axialement à l'intérieur de l'anneau 11.

L'anneau 6 qui forme la partie médiane de la roue de mesure et dont la surface 5 radialement à l'extérieur est conforme à la surface correspondante de la roue d'utilisation du pneumatique est mise en place par emboitage partiel de la partie 13 dans ledit anneau 6 jusqu'à ce que la face axiale 62 de l'anneau 6 soit en contact avec la face axialement à l'intérieur de l'anneau 10. Les anneaux 1, 11, 10, 6 ainsi assemblés sont maintenus solidairement à l'aide de vis 12 régulièrement réparties dans la direction circonférentielle. De façon à assurer une répartition équilibrée des efforts de contact entre les anneaux 11, 10, 6, résultant du serrage par les vis 12, il est réalisé une cavité circonférentielle d'une profondeur de 0,5 mm sur les faces axialement à l'intérieur des anneaux 11 et 10.

La largeur de l'anneau 11 est choisie de telle façon que la surface 41 radialement à l'extérieur de l'anneau de mesure soit dans le prolongement de la surface radialement à l'extérieur du bec 31 de l'anneau 1, tout en préservant un jeu axial fonctionnel de l'ordre de 0,1 mm.

De même, la surface 5 de l'anneau 6 comporte une portion de surface 5' qui se trouve dans le prolongement de la surface 41 avec un même jeu axial fonctionnel de 0,1 mm environ.

Pour terminer le montage de la roue de mesure, un dernier anneau 2 est assemblé coaxialement à l'anneau 1 par emboitage partiel dans l'anneau 6 et de telle façon que sa face axialement à l'intérieur, composée de deux portions de face 28 et 29, soit en contact par sa portion 29 avec la face axialement à l'intérieur 63 de l'anneau 1 et par sa portion 28 avec la face axialement à l'intérieur 61 de l'anneau 6. Ledit anneau 2 comporte sur sa face radialement à l'extérieur un rebord 24 et un siège 21 incliné vers l'intérieur et de mêmes dimensions radiales externes que le siège 4 et destiné à supporter l'autre bourrelet du pneumatique monté. La liaison mécanique des anneaux 1 et 2 est assurée par des vis 22 régulièrement disposées dans la direction circonférentielle et en nombre suffisant.

Les faces radiales extérieures des anneaux 6 et 2 forment une gorge 27 permettant le montage d'un pneumatique sans avoir à démonter la roue de mesure. L'anneau 2 comporte une valve 23 débouchant dans le creux de jante pour assurer le gonflage et le dégonflage du pneumatique une fois celui-ci monté sur la roue et d'autre part il est prévu une rainure circonférentielle 25 sur la face 28 de l'anneau 2 en contact avec la face 61 de l'anneau 6 dans laquelle est placé un joint annulaire 26 permettant d'assurer l'étanchéité entre lesdits anneaux 6 et 2.

Dans la roue de mesure ainsi réalisée, des moyens de positionnement axial du bourrelet du pneumatique par rapport à l'anneau de mesure 7 sont constitués par les rebords 3 et 24 disposés de façon à imposer l'écartement axial entre les bourrelets d'un pneumatique monté sur ladite roue à une valeur fixée et par le bec 31 dont la largeur axiale δ fixe avec précision la position axiale de l'anneau de mesure par rapport au bourrelet du pneumatique lorsque ledit pneumatique est monté sur la roue de mesure et vient en appui axial contre les rebords.

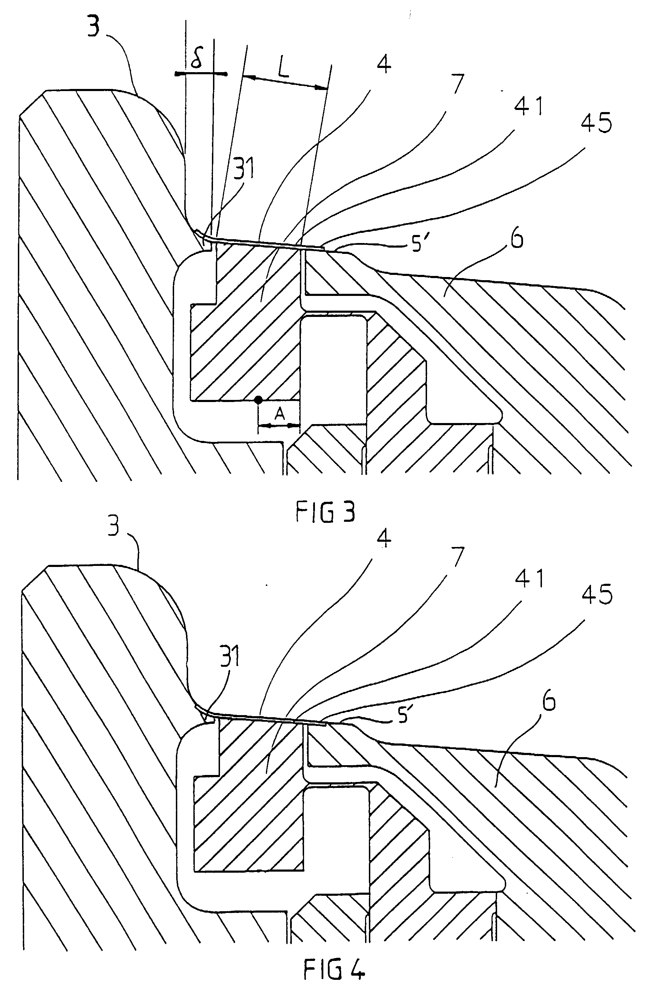

Dans l'exemple décrit, dont une vue partielle est donnée sur la figure 3, l'écartement fixé correspond à celui d'une jante d'utilisation de 5 1/2 '', et la largeur axiale δ égale à 3,7 mm permet de positionner axialement la surface 41 de l'anneau de mesure 7 de façon à être située dans la zone du bourrelet du pneumatique que l'on souhaite caractériser. La largeur L, égale à 10 mm dans l'exemple présenté, est choisie de façon à être adaptée au bourrelet du pneumatique dont on veut mesurer l'effort de serrage sur le siège de mesure 4.

Suivant un autre aspect de l'invention, il est possible de concevoir un anneau de mesure tel qu'il existe, sur la face 42 de l'anneau de mesure 7 opposée à la face de contact 41, au moins une position axiale A, mesurée par rapport à l'arête axialement à l'intérieur de la face 42, telle que les valeurs des déformations axiale et circonférentielle en cette position ne dépendent que de la résultante des pressions de contact et non de la répartition desdites pressions.

L'ensemble des points, sur la face 42, situés à la position axiale A, est un cercle centré sur l'axe de rotation 101 de la roue de mesure 100, ledit cercle étant le lieu géométrique des centres instantanés de rotation de chaque section transversale de l'anneau de mesure sous l'action des pressions de contact.

En effet, la demanderesse s'est aperçu qu'en effectuant successivement des calculs de structure sur l'anneau de mesure 7 pour différentes répartitions de pression s'exerçant sur la surface de contact 41 dudit anneau 7 mais en conservant pour chaque répartition le même effort global de serrage, il était possible, en optimisant la forme de la section transversale dudit anneau de mesure, de trouver sur la face 42 une position axiale A mesurée par rapport à l'arête axialement intérieure de ladite face 42, telle qu'en cette position les valeurs des déformations circonférentielles et axiales soient indépendantes de la répartition des pressions de contact sur la surface de contact 41 de l'anneau de mesure 7 pour un effort global de serrage identique et soient au maximum égales à 10² micromètres par mètre.

La limitation en grandeur des déformations permet de s'assurer que la rigidité de l'anneau de mesure sous les différentes répartitions de pression de contact choisies, est au moins équivalente à la rigidité de la roue de montage correspondante sous ces mêmes efforts.

Un tel calcul est réalisé en utilisant par exemple une méthode de calcul dite "méthode des éléments finis" bien connue de l'homme du métier et en utilisant une procédure itérative. Dans l'exemple présenté, le calcul a été fait en tenant compte des conditions de liaison de l'anneau de mesure 7 sur sa face 43 avec le tube 9. Dans l'exemple décrit, la position axiale A, mesurée par rapport à l'arête axialement à l'intérieur de la face 42, vaut 5,4 mm.

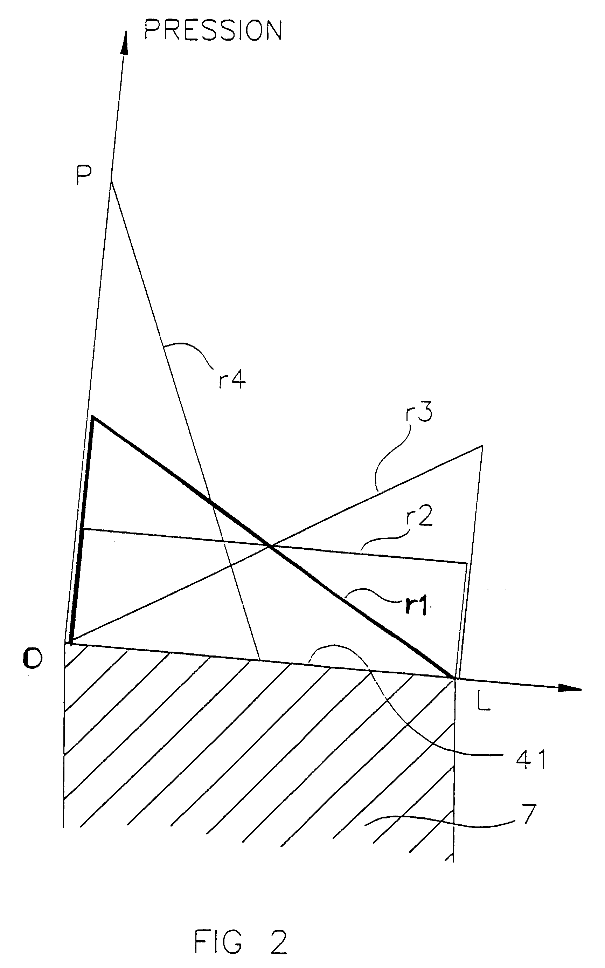

Sur la figure 2, sont représentées quatre répartitions de pression de contact utilisées dans le calcul de la géométrie de l'anneau de mesure réalisé conformément à l'invention. Lesdites répartitions r1, r2, r3, r4 de pressions perpendiculaires à la surface de contact 41 de l'anneau de mesure 7 ont la particularité d'avoir la même résultante en module, c'est-à-dire que les aires sous tendues par ces répartitions sont toutes égales, mais bien sûr, les positions axiales d'application desdites résultantes sont différentes. Sur cette figure, la direction portée en abscisse représente la direction parallèle à la génératrice de la face 41 de l'anneau de mesure 7 et celle portée en ordonnée représente le module des pressions perpendiculaires à la surface de contact 41.

Les moyens de mesure de la résultante des pressions de contact sur la surface de contact 41 de l'anneau de mesure 7 comprennent des jauges d'extensométrie mesurant les déformations circonférentielles et axiales, lesdites jauges étant collées sur la face 42 de l'anneau de mesure 7 à la position axiale A par rapport à l'arête axialement à l'intérieur de la face 42, et régulièrement réparties circonférentiellement sur cette face 42. Après avoir réalisé un pré-étalonnage de l'anneau de mesure 7 en le soumettant à des efforts connus, il est aisé de traiter les signaux provenant desdites jauges d'extensométrie par des moyens, non représentés ici, et d'afficher la valeur de la résultante des pressions de contact s'exerçant sur la surface 41.

Pour accéder à la position axiale d'application de la résultante des pressions de contact sur la face 41 de l'anneau 7, on évalue tout d'abord la rotation des sections transversales dudit anneau puis à partir de cette rotation la valeur du moment équivalent au moment de ladite résultante. Pour mesurer ladite rotation de l'anneau de mesure 7, des jauges d'extensométrie, mesurant les déformations circonférentielles, sont collées sur la face 42 de l'anneau de mesure 7 de part et d'autre et de manière symétrique de la position axiale A et régulièrement réparties circonférentiellement sur cette face 42. Les jauges d'extensométrie sont reliées à des moyens, non représentés ici, de traitement et d'affichage de la valeur de la position axiale de la résultante des pressions sur la surface 41.

Afin de pouvoir faire des mesures avec un pneumatique gonflé, l'étanchéité du siège de mesure 4 est réalisée au moyen d'un film 45 imperméable et adhésif sur l'une de ses faces, d'une épaisseur inférieure à 0,1 mm et déformable élastiquement, ledit film 45 adhérant au siège de mesure 4, comme cela est représenté sur la figure 3.

Dans la réalisation décrite, ce film 45 a une épaisseur de 0,06 mm et est disposé sur le siège de mesure 4 c'est-à-dire sur la surface 41 de l'anneau de mesure 7 et sur une partie de la surface radialement à l'extérieur du bec 31 du rebord 3 et une partie de la surface 5' radialement à l'extérieur de l'anneau 6, de façon à recouvrir les jeux axiaux entre ledit anneau 7 et le bec 31 d'une part et l'anneau 6 d'autre part. L'élasticité de ce film 45 autorise la possibilité d'une extension dans le sens circonférentiel facilitant la mise en place; le collage du film 45 au siège de mesure assure le maintien en place dudit film.

La mise en place d'un film, même d'épaisseur faible, entre le siège 4 de la roue de mesure et le bourrelet du pneumatique provoque une augmentation de l'effort de serrage qu'il est possible d'éviter en réalisant le montage représenté sur la figure 4. Une dépression, d'une profondeur égale à l'épaisseur du film 45, est réalisée sur le bec 31 du rebord 3 et sur une partie de la surface 5' de l'anneau 6, et les cotes radialement à l'extérieur de la surface 41 de l'anneau de mesure 7 sont réduites d'une quantité égale à l'épaisseur du film 45, de façon que les cotes géométriques prises sur la face radialement à l'extérieur du film 45, après mise en place dudit film 45 dans ladite dépression et sur ladite surface 41, soient les mêmes que celles du siège de la jante d'utilisation.

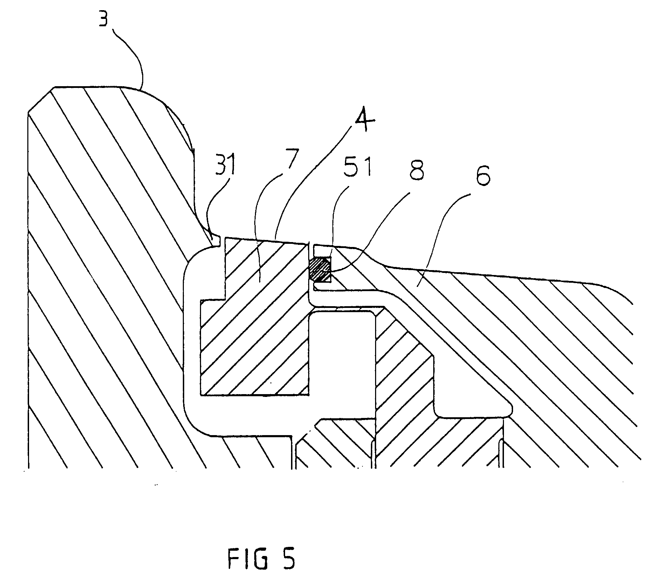

Comme le montre la figure 5, il est possible de réaliser une étanchéité satisfaisante au niveau du siège de mesure 4, sans employer de film sur ledit siège, mais en prévoyant une rainure circonférentielle 51 sur la face axiale de l'anneau 6 située à proximité de l'anneau de mesure 7 dans laquelle est mis en place un joint annulaire d'étanchéité 8. Lors de la mise en place du bourrelet du pneumatique, ledit bourrelet complète l'étanchéité en recouvrant le jeu axial entre le bec 31 du rebord 3 et l'anneau de mesure 7.

Un dernier moyen de réaliser l'étanchéité au niveau du siège de mesure 4 consiste à remplir les jeux axiaux entre le bec 31 et l'anneau de mesure 7 d'une part et entre l'anneau 6 et ledit anneau 7 avec un matériau de très faible rigidité par rapport à celle dudit anneau de mesure 7, ledit matériau pouvant assurer en même temps le maintien de l'anneau de mesure 7 pendant la phase de montage du pneumatique sur la roue de mesure.

Avec une telle roue de mesure il est possible d'obtenir aisément les valeurs et les positions axiales des efforts de serrage d'un pneumatique gonflé à différentes valeurs de pression interne. De plus, ce moyen de mesure permet d'effectuer les mêmes mesures avec un pneumatique quasiment dégonflé, après avoir effectué une mise en place préalable des bourrelets dudit pneumatique sur la roue de mesure en gonflant tout d'abord ledit pneumatique à une pression correspondant, par exemple, à la valeur de la pression d'utilisation ultérieure et ensuite en dégonflant ledit pneumatique jusqu'à la pression désirée.

Un autre avantage de la présente invention réside dans la possibilité de suivre aisément la mise en place progressive du bourrelet d'un pneumatique sur le siège de mesure au cours du gonflage en suivant les variations du module de la résultante des pressions de contact sur le siège de mesure ainsi que les variations de position axiale de ladite résultante et cela indépendamment de la vitesse de gonflage. De plus, il est possible, avec le moyen de mesure selon l'invention d'enregistrer l'évolution du serrage du pneumatique au cours du temps pour une pression de gonflage fixée.

Il est aisé à l'homme du métier de réaliser l'adaptation d'une telle roue de mesure pour des pneumatiques se montant sur des roues de largeurs différentes mais ayant toutes le même diamètre en disposant, par exemple, des entretoises entre les anneaux 2 et 6 et 1.

En changeant les cotes δ et L, l'homme du métier peut agrandir, réduire ou déplacer la zone de mesure sous le bourrelet du pneumatique à caractériser.

L'invention se revèle particulièrement utile dans le cas de roues de contrôle de pneumatiques, lesdites roues étant formées par l'assemblage de deux demi-roues, l'une au moins de ces demi-roues comportant un siège de mesure de la résultante des pressions de contact selon l'invention.

Enfin, l'application de l'invention à d'autres dimensions de roues, pour le montage de pneumatiques tourisme, poids-lourd, avion, ne pose pas de problème particulier sinon qu'il peut être nécessaire, pour chaque type de roue, de recalculer la forme de l'anneau de mesure en suivant la méthode décrite dans le présent document. En dernier lieu, l'invention peut aussi être appliquée à des sièges de jante de forme quelconque et d'inclinaison quelconque par rapport à l'axe de la roue dans la limite d'un angle au plus de 30° avec l'axe de la roue, et aussi à des jantes dont les rebords sont situés radialement à l'intérieur des génératrices des sièges desdites jantes.

## Revendications

1. Roue de mesure de l'effort de serrage des bourrelets d'un pneumatique, ladite roue ayant des sièges destinés à supporter l'effort de serrage des bourrelets dudit pneumatique, caractérisée en ce que au moins l'un des sièges comporte un anneau de mesure (7) ayant une surface de contact (41) formant une partie dudit siège, ladite surface (41) étant de révolution autour de l'axe rotation, ledit anneau (7) comportant des moyens de mesure de la résultante des pressions de contact sur la surface de contact (41) de l'anneau de mesure (7) et ladite roue comportant des moyens pour permettre le positionnement axial précis du bourrelet par rapport audit anneau.

2. Roue de mesure selon la revendication 1, caractérisée en ce que l'anneau de mesure (7) comporte des moyens de mesure de la position axiale de la résultante des pressions de contact sur la surface de contact (41) de l'anneau de mesure (7).

3. Roue de mesure selon l'une des revendications 1 ou 2, caractérisée en ce que la surface de contact (41) de l'anneau de mesure (7) est tronconique et fait un angle, par rapport à l'axe de la roue, au plus égal à 30°.

4. Roue de mesure selon la revendication 3, caractérisée en ce que les moyens de mesure de la résultante des pressions de contact sur la surface de contact (41) de l'anneau de mesure (7) comprennent des jauges d'extensométrie, disposées et collées sur l'anneau de mesure (7) de façon à mesurer le rétreint dudit anneau de mesure (7).

5. Roue de mesure selon la revendication 2, caractérisée en ce que les moyens de mesure de la position axiale de la résultante des pressions de contact sur la surface de contact (41) de l'anneau de mesure (7) comprennent des jauges d'extensométrie, collées sur ledit anneau (7) afin d'obtenir la rotation de la section transversale dudit anneau de mesure (7) sous l'action desdites pressions de contact.

6. Roue de mesure selon l'une quelconque des revendications 1 à 5, caractérisée en ce que l'anneau de mesure (7) est lié à la roue d'une façon qui, quant à l'effet de serrage, le découple du reste de celle-ci.

7. Roue de mesure selon la revendication 6, caractérisée en ce que la liaison de l'anneau de mesure (7) à la roue permettant de découpler ledit anneau de la roue est réalisée en reliant l'anneau (7) par l'une de ses faces latérales à un tube mince (9) de faible rigidité disposé de telle façon que son axe soit confondu avec l'axe (101) de la roue, ledit tube (9) étant solidaire d'un anneau de liaison (10) et ledit anneau (10) étant solidaire du reste de la roue de mesure.

8. Roue de mesure selon l'une des revendications 1 à 7, caractérisée en ce qu'il est prévu des moyens pour assurer l'étanchéité de la roue de mesure afin de réaliser la mesure de l'effort de serrage qu'un pneumatique, monté et gonflé, exerce par ses bourrelets sur les sièges de ladite roue.

9. Roue de mesure selon la revendication 8, caractérisée en ce que les moyens permettant d'assurer l'étanchéité du siège de mesure (4) sont composés d'un film (45) adhésif sur une de ses faces, d'une épaisseur inférieure à 0,1 mm et déformable élastiquement, ledit film (45) adhérant en totalité au siège de mesure (4).

10. Roue de mesure selon la revendication 8, caractérisée en ce que les moyens permettant d'assurer l'étanchéité du siège de mesure (4) sont composés d'un film (45), ledit film (45) étant mis en place dans une dépression réalisée dans le siège de mesure (4) et dont la profondeur est égale à l'épaisseur dudit film (45).

11. Roue de mesure selon la revendication 8, caractérisée en ce que les moyens permettant d'assurer l'étanchéité du siège de mesure (4) sont composés d'un joint torique (8) disposé de manière à venir obstruer le jeu axial fonctionnel entre l'anneau de mesure (7) et la partie de la roue axialement à l'intérieur dudit anneau.

12. Roue de mesure selon l'une quelconque des revendications 1 à 11, caractérisée en ce que les moyens de positionnement axial du bourrelet par rapport à l'anneau de mesure (7) sont constitués par des rebords (3) et (24) disposés de façon à imposer l'écartement axial entre les bourrelets d'un pneumatique monté sur ladite roue à une valeur fixée et par un bec (31) dont la largeur axiale (δ) fixe avec précision la position de l'anneau de mesure (7) par rapport au bourrelet du pneumatique lorsque ledit pneumatique est monté sur la roue de mesure et vient en appui axial contre les rebords.

13. Roue de mesure selon l'une quelconque des revendications 1 à 12, caractérisée en ce que l'anneau de mesure (7) a une section radiale méridienne dont la forme est déterminée en effectuant successivement des calculs de structure pour différentes répartitions de pression s'exerçant sur la surface de contact (41) dudit anneau (7) mais en conservant pour chaque répartition le même effort de serrage, et en optimisant ladite forme de façon à trouver sur la face (42) une position axiale (A) mesurée par rapport à l'arête axialement intérieure de ladite face (42), telle qu'en cette position axiale (A) les valeurs des déformations circonférentielle et axiale soient indépendantes de la répartition des pressions de contact sur la surface de contact (41) de l'anneau de mesure (7) pour un effort de serrage identique et soient au maximum égales à 10² micromètres par mètre.

14. Roue de mesure selon la revendication 13, caractérisée en ce que des jauges d'extensométrie sont collées sur la face (42) de l'anneau de mesure (7) à la position axiale (A) pour mesurer le rétreint dudit anneau de mesure (7) et en ce que des jauges d' d'extensométrie sont collées sur la face (42) de l'anneau de mesure (7) de part et d'autre de ladite position axiale (A) pour mesurer la rotation de la section transversale de l'anneau de mesure (7).

## Patentansprüche

1. Rad zur Messung der Klemmkraft der Wülste eines Reifens, wobei das genannte Rad Sitze aufweist, die dazu bestimmt sind, die Klemmkraft der Wülste des genannten Reifens abzustützen, dadurch gekennzeichnet, daß mindestens einer der Sitze einen Meßring (7) mit einer Berührungsfläche (41) aufweist, die einen Abschnitt des genannten Sitzes bildet, die genannte Fläche (41) eine Rotationsfläche um die Drehachse ist, der genannte Ring (7) Mittel zur Messung der Resultierenden der Berührungsdrücke auf der Berührungsfläche (41) des Meßrings (7) aufweist und das genannte Rad Mittel aufweist, um die axiale, genaue Positionierung des Wulstes in Bezug auf den genannten Ring zu gestatten.

2. Meßrad nach Anspruch 1, dadurch gekennzeichnet, daß der Meßring (7) Mittel zur Messung der axialen Lage der Resultierenden der Berührungsdrücke auf der Berührungsfläche (41) des Meßrings (7) aufweist.

3. Meßrad nach einem der Ansprüche 1 oder 2, dadurch gekennzeichnet, daß die Berührungsfläche (41) des Meßrings (7) kegelstumpfförmig ist und einen Winkel in Bezug auf die Achse des Rades bildet, der höchstens 30° beträgt.

4. Meßrad nach Anspruch 3, dadurch gekennzeichnet, daß die Mittel zur Messung der Resultierenden der Berührungsdrücke auf der Berührungsfläche (41) des Meßriungs (7) Dehnungsmeßstreifen aufweisen, die auf dem Meßring (7) derart angeordnet und aufgeklebt sind, daß sie die Querschnittsverbinderung des genannten Meßrings (7) messen.

5. Meßrad nach Anspruch 2, dadurch gekennzeichnet, daß die Mittel zur Messung der axialen Lage der Resultierenden der Berührungsdrücke auf der Berührungsfläche (41) des Meßrings (7) Dehnungsmeßstreifen aufweisen, die auf den genannten Ring (7) aufgeklebt sind, um die Drehung des Querschnitts des genannten Meßrings (7) unter Einwirkung der genannten Berührungsdrücke aufzunehmen.

6. Meßrad nach irgendeinem der Ansprüche 1 bis 5, dadurch gekennzeichnet, daß der Meßring (7) mit dem Rad auf eine Art und Weise verbunden ist, die, was die Klemmwirkung angeht, ihn vom Rest dieses Rades entkoppelt.

7. Meßrad nach Anspruch 6, dadurch gekennzeichnet, daß es die Verbindung des Meßrings (7) mit dem Rad gestattet, den genannten Meßring vom Rad abzukoppeln, und dadurch ausgeführt ist, daß der Ring (7) mit einer seiner Seitenflächen mit einem dünnen Rohr (9) mit geringer Steifigkeit verbunden ist, das derart angeordnet ist, daß seine Achse mit der Achse (101) des Rades zusammenfällt, wobei das genannte Rohr (9) mit einem Verbindungsring (10) fest verbunden ist und der genannte Ring (10) fest mit dem Rest des Meßrades verbunden ist.

8. Meßrad nach einem der Ansprüche 1 bis 7, dadurch gekennzeichnet, daß Mittel zum Sicherstellen der Abdichtung des Meßrades vorgesehen sind, um die Messung der Klemmkraft durchzuführen, die ein Reifen, der montiert und aufgepumpt ist, durch seine Wülste auf die Sitze des genannten Rades ausübt.

9. Meßrad nach Anspruch 8, dadurch gekennzeichnet, daß die Mittel, die es gestatten, die Abdichtung des Meßsitzes (4) sicherzustellen, aus eine Klebfolie (45) auf einer seiner Flächen mit einer Dicke zusammengesetzt sind, die kleiner ist als 0,1 mm, die elastisch verformbar ist, und daß die genannte Folie (45) in ihrer Gesamtheit am Meßsitz (4) anhaftet.

10. Meßrad nach Anspruch 8, dadurch gekennzeichnet, daß die Mittel, die es gestatten, die Abdichtung des Meßsitzes (4) sicherzustellen, aus einer Folie (45) zusammengesetzt sind, und daß die genannte Folie (45) in eine Vertiefung eingesetzt ist, die im Meßsitz (4) ausgebildet ist und deren Tiefe gleich ist der Dicke der genannten Folie (45).

11. Meßrad nach Anspruch 8, dadurch gekennzeichnet, daß die Mittel, die es gestatten, die Abdichtung des Meßsitzes (4) sicherzustellen, aus einer torusförmigen Dichtung (8) zusammengesetzt sind, die derart angeordnet ist, daß sie das axiale Betriebsspiel zwischen dem Meßring (7) und dem Teil des Rades axial innerhalb des genannten Ringes versperrt.

12. Meßrad nach irgendeinem der Ansprüche 1 bis 11, dadurch gekennzeichnet, daß die Mittel zur axialen Positionierung des Wulstes in Bezug auf den Meßring (7) von Randstegen (3) und (24) gebildet sind, die derart angeordnet sind, daß sie den axialen Abstand zwischen den Wülsten eines Reifens, der auf dem genannten Rad montiert ist, auf einen festgelegten Wert festlegen, sowie von einem Schnabel bzw. einer schmalen Leiste (31), dessen bzw. deren axiale Breite (δ) mit Genauigkeit die Lage des Meßrings (7) in Bezug auf den Wulst des Reifens festlegt, wenn der Reifen auf dem Meßrad montiert ist und in axiale Anlage gegen die Randstege gelangt.

13. Meßrad nach irgendeinem der Ansprüche 1 bis 12, dadurch gekennzeichnet, daß der Meßring (7) einen radialen Meridianschnitt aufweist, dessen Form dadurch bestimmt ist, daß man aufeinanderfolgend Strukturberechnungen für unterschiedliche Druckverteilungen vornimmt, die sich auf der Berührungsfläche (41) des genannten Ringes (7) einstellen, wobei man aber für jede Verteilung dieselbe Klemmkraft bewahrt, und daß man die genannte Form derart optimiert, daß man auf der Fläche (42) eine axiale Lage (A) auffindet, die in Bezug auf die axial innenliegende Kante der genannten Fläche (42) derart bemessen ist, daß in dieser axialen Lage (A) die Werte der Umfangsverformung und der axialen Verformung unabhängig von der Verteilung der Berührungsdrücke auf der Berührungsfläche (41) des Meßringes (7) für eine identische Klemmkraft maximal 10² Mikrometer pro Meter betragen.

14. Meßrad nach Anspruch 13, dadurch gekennzeichnet, daß Dehnungsmeßstreifen auf der Fläche (42) des Meßringes (7) in der axialen Lage (A) aufgeklebt sind, um die Querschnittsverminderung des genannten Meßringes (7) zu messen, und daß Dehnungsmeßstreifen auf der Fläche (42) des Meßringes (7) beiderseits der genannten axialen Lage (A) aufgeklebt sind, um die Drehung des Querschnitts des Meßringes (7) zu messen.

## Claims

1. A wheel for measuring the clamping force of the beads of a tyre, said wheel having seats intended to withstand the clamping force of the beads of said tyre, characterised in that at least one of the seats comprises a measuring ring (7) with a contact surface (41) that forms part of said seat, said surface (41) being a surface of revolution about the axis of rotation, said ring (7) comprising means for measuring the resultant of the contact pressures on the contact surface (41) of the measuring ring (7) and said wheel comprising means permitting the precise axial positioning of the bead in relation to said ring.

2. A measuring wheel according to claim 1, characterised in that the measuring ring (7) comprises means for measuring the axial position of the resultant of the contact pressures on the contact surface (41) of the measuring ring (7).

3. A measuring wheel according to one of claims 1 or 2, characterised in that the contact surface (41) of the measuring ring (7) is frustoconical and forms an angle of at most 30° relative to the wheel axis.

4. A measuring wheel according to claim 3, characterised in that the means for measuring the resultant of the contact pressures on the contact surface (41) of the measuring ring (7) comprise wire strain gauges, arranged and glued on the measuring ring (7) so as to measure the contraction of said measuring ring (7).

5. A measuring wheel according to claim 2, characterised in that the means for measuring the axial position of the resultant of the contact pressures on the contact surface (41) of the measuring ring (7) comprise wire strain gauges bonded to said ring (7) so as to obtain the rotation of the cross-section of said measuring ring (7) under the action of said contact pressures.

6. A measuring wheel according to any one of claims 1 to 5, characterised in that the measuring ring (7) is connected to the wheel such that, as for the clamping effect, it is decoupled from the rest of the wheel.

7. A measuring wheel according to claim 6, characterised in that the connection of the measuring ring (7) to the wheel allowing said ring to be decoupled from the wheel is effected by connecting the ring (7) by one of its lateral faces to a thin tube (9) of low rigidity placed in such a way as to have its axis coaxial with the axis (101) of the wheel, said tube (9) being integral with a connecting ring (10) and said ring (10) being integral with the rest of the measuring wheel.

8. A measuring wheel according to one of claims 1 to 7, characterised in that means are provided to ensure the airtightness of the measuring wheel in order to measure the clamping force that a tyre, mounted and inflated, exerts by its beads on the seats of said wheel.

9. A measuring wheel according to claim 8, characterised in that the means to ensure the airtightness of the measuring seat (4) are composed of a film (45) which is adhesive on one of its faces, with a thickness of less than 0.1 mm and elastically deformable, said film (45) being totally adherent to the measuring seat (4).

10. A measuring wheel according to claim 8, characterised in that the means to ensure the airtightness of the measuring seat (4) are composed of a film (45), said film (45) being placed in a recess provided in the measuring seat (4) the depth of which is equal to the thickness of said film (45).

11. A measuring wheel according to claim 8, characterised in that the means to ensure the airtightness of the measuring seat (4) are composed of a gasket (8) placed in such a way as to obstruct the functional axial clearance between the measuring ring (7) and the axially inner wheel part of said ring.

12. A measuring wheel according to any one of claims 1 to 11, characterised in that the means for the axial positioning of the bead relative to the measuring ring (7) are provided by flanges (3) and (24) arranged in such a way as to impose the axial space between the beads of a tyre mounted on said wheel at a set value, and by a projection (31) with an axial width (δ) which precisely determines the position of the measuring ring (7) relative to the bead of the tyre when said tyre is mounted on the measuring wheel and comes to bear axially against the flanges.

13. A measuring wheel according to any one of claims 1 to 12, characterised in that the measuring ring (7) has a meridian radial section the form of which is determined by successively effecting structural calculations for different pressure distributions applied on the contact surface (41) of said ring (7) while maintaining for each distribution the same clamping force, and by optimising said form in order to find on the face (42) an axial position (A) measured relative to the axially inner edge of said face (42), such that in this axial position (A) the values of the circumferential and axial deformations are independent of the distribution of the contact pressures on the contact surface (41) of the measuring ring (7) for the same clamping force and are at most equal to 10² micrometres by metre.

14. A measuring wheel according to claim 13, characterised in that wire strain gauges are bonded to the face (42) of the measuring ring (7) at the axial position (A) to measure the contraction of said measuring ring (7) and in that the wire strain gauges are glued to the face (42) of the measuring ring (7) on either side of said axial position (A) to measure the rotation of the cross-section of the measuring ring (7).
